# EUROPEAN PATENT SPECIFICATION

(11) **EP 1 661 635 B1**
(45) Date of publication and mention of the grant of the patent: **22.07.2009**
(21) Application number: 05111315.7
(22) Date of filing: 25.11.2005
(51) Int. Cl.: B09B 1/00, E02D 31/00

(54) **Refuse Dump Containment Structure**
Deponieabdichtung
Etancheité pour dépôts des ordures

(30) Priority: 26.11.2004 IT FG20040006
(43) Date of publication of application: 31.05.2006
(73) Proprietor: GEOM. CIRO FRISOLI E C. s.a.s. di COCCA ANTONIA, 71100 Foggia (IT)
(72) Inventor: Frisoli, Ciro, 71100 Foggia (IT)
(74) Representative: Jorio, Paolo

(56) References cited:
- WO-A-97/43489
- DE-C1- 19 721 833
- DE-U1- 9 314 980
- US-A- 4 768 897
- US-A- 5 259 697

## Description

The present invention relates to a refuse dump containment structure.

At present, once the specially formed pit is filled with refuse, it is standard practice to continue dumping, by building walls for containing the refuse accumulated aboveground.

The walls are normally in the form of embankments made of granular and/or earth materials, and are about 15m wide, depending on the aboveground height of the dump.

This solution calls for an enormous amount of material, with all the obvious drawbacks this entails, particularly in terms of cost, on account of the large volume occupied by the embankments, as opposed to refuse, and the cost of transporting the material. What is more, the situation can only get worse, in view of the continual increase in the amount of refuse produced, and therefore in the number of dumps required, and the increasing shortage of land available for new dumping sites.

A refuse dump containment structure according to the preamble of claim 1 is disclosed by DE 19721833 A.

It is an object of the present invention to provide a refuse dump wall construction system designed to drastically reduce the amount of embankment material employed.

According to the present invention, there is provided a refuse dump containment structure, characterized by comprising a foundation layer immersed in refuse and/or the ground; and a number of containment layers stacked on top of said foundation layer, and each of which is covered for support by a geomesh, and comprises an outer portion of vegetable earth or clay, and an inner portion of compacted refuse; said outer portion comprising a water drainage sector and a biogas drainage sector, and being inclined at an angle of 75° or less.

In a preferred embodiment of the present invention, each of the inner portions comprises a number of sublayers of compacted refuse.

In a further preferred embodiment of the present invention, the foundation layer comprises anhydrous material covered with a geofabric.

A non-limiting embodiment of the present invention will be described by way of example with reference to the accompanying drawings, in which:
Figure 1 shows a cross section of a first embodiment of the structure according to the present invention;
Figure 2 shows a cross section of a second embodiment of the structure according to the present invention.

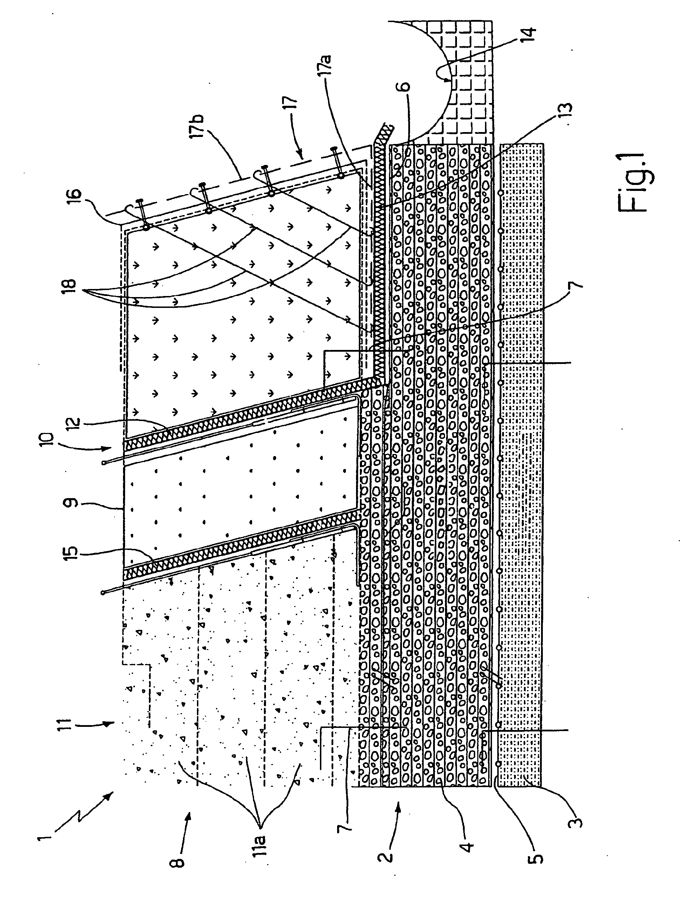

Number 1 in Figure 1 indicates as a whole a first embodiment of the structure according to the present invention. Structure 1 comprises a foundation layer 2 defined by a bottom layer 3 of fine granular material, such as pit sand, and by a top layer 4 of inert anhydrous material, such as so-called "tout venant". A geofabric or geomesh layer 5 is laid on top of bottom layer 3, while top layer 4 is covered completely with a geofabric layer 6 fixed to top layer 4 by a number of iron stakes 7.

On top of foundation layer 2 are laid, one on top of the other, a number of containment layers 8 reinforced and stabilized with a geomesh layer, and only the first of which is shown in Figure 1. Each containment layer 8 comprises an outer portion 10 facing outwards of the dump and made of vegetable earth or clay; and an inner portion 11 facing inwards of the dump and made of compacted refuse. Each containment layer 8 is covered with a geomesh 9 for supporting layer 8 and sized on the basis of specific static calculations. More specifically, the geomesh 9 employed is made of multifilament polyester fibres covered with a protective PVC layer.

Outer portion 10 comprises a first water drainage sector 12 connected to a drainage layer 13 between foundation layer 2 and outer portion 10. More specifically, drainage layer 13 has a drain edge located over a catch channel 14 surrounding the outside of structure 1.

Outer portion 10 also comprises a second biogas drainage sector 15 facing inner portion 11. More specifically, the part of outer portion 10 between first drainage sector 12 and second drainage sector 15 is made of clay. First drainage sector 12, second drainage sector 15, and drainage layer 13 are made of drain mats with a composite, high-vacuum structure made of polypropylene filaments and sandwiched between two geofabric layers.

Outer portion 10 is covered externally with a geojute layer 16, and is supported by an electrowelded mesh 17 comprising a base 17a beneath outer portion 10, and a wall 17b for laterally retaining outer portion 10. Base 17a and wall 17b form an angle of 75° or less, and are stabilized by a number of ties 18.

Inner portion 11 comprises three sublayers 11a of compacted refuse. The presence of sublayers 11a provides for better compacting the refuse.

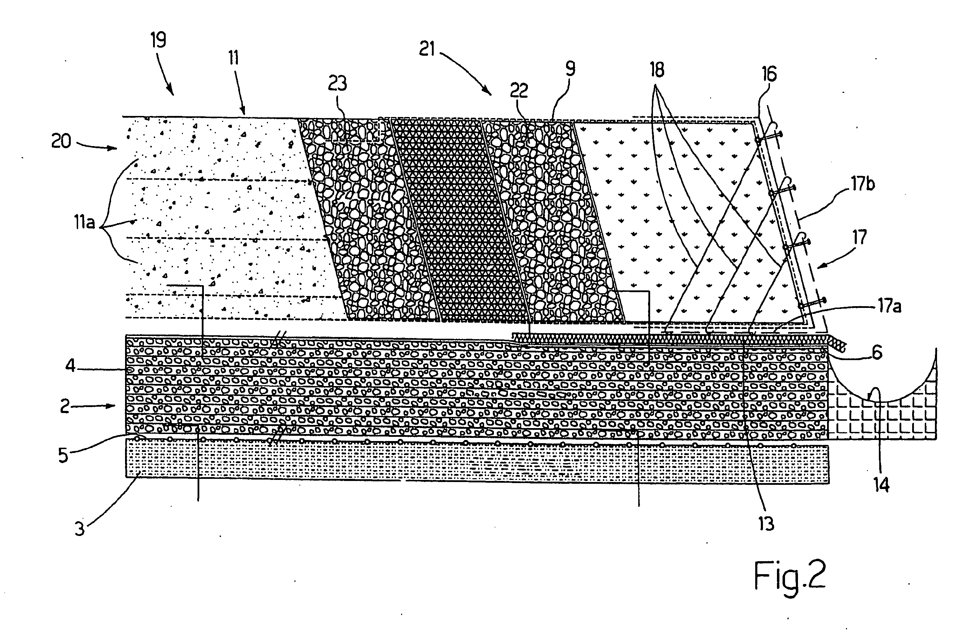

Number 19 in Figure 2 indicates as a whole a second embodiment of the structure according to the present invention. Any parts identical to those of structure 1 are indicated using the same reference numbers, with no further description.

Structure 19 comprises a number of containment layers 20, only the first of which is shown in Figure 2, and each of which comprises an outer portion 21, in turn comprising a first drainage sector 22 made of material such as gravel, and which is connected to a drainage layer 13 as described with reference to structure 1. Outer portion 21 also comprises a second biogas drainage sector 23, also made of material such as gravel, and facing inner portion 11 as described with reference to structure 1.

As will be clear from the foregoing description, the structure according to the present invention calls for a minimum amount of material. In fact, most of the structure is made from the refuse present in the dump and suitably compacted.

Moreover, processing of the refuse to form the structure results in a reduction in refuse volume.

Finally, the electrowelded mesh at the particular angle described, and the geomesh and geofabric layers enable the construction of safe, solid wall structures, even of considerable height.

## Claims

1. A refuse dump containment structure (1; 19), having a foundation layer (2) immersed in refuse and/or the ground and **characterized by** comprising a number of containment layers (8; 20) stacked on top of said foundation layer, and each of which is covered for support by a geomesh (9), and comprises an outer portion (10; 21) of vegetable earth or clay, and an inner portion (11) of compacted refuse; said outer portion (10; 21) comprising a water drainage sector (12; 22) and a biogas drainage sector (15; 23), and being inclined at an angle of 75° or less.

2. A refuse dump containment structure as claimed in Claim 1, **characterized in that** each of the inner portions (11) comprises a number of sublayers (11a) of compacted refuse.

3. A refuse dump containment structure as claimed in Claim 1 or 2, **characterized in that** the foundation layer (2) comprises a bottom layer (3) of fine granular material; and a top layer (4) of inert anhydrous material.

4. A refuse dump containment structure as claimed in Claim 3, **characterized in that** the top layer (4) is covered completely with a geofabric layer (6).

5. A refuse dump containment structure as claimed in Claim 4, **characterized in that** the bottom layer (3) is covered on top with a geomesh or geofabric layer (5).

6. A refuse dump containment structure as claimed in any one of the foregoing Claims, **characterized in that** the outer portion (10; 21) of each of the containment layers (8; 20) is covered externally with a geojute layer (16).

7. A refuse dump containment structure as claimed in any one of the foregoing Claims, **characterized by** comprising electrowelded mesh (17) comprising a base portion (17a) and a wall portion (17b), which are stabilized with respect to each other by a number of ties (18), and provide for maintaining the desired inclination of said outer portion (10; 21).

## Patentansprüche

1. Mülldeponieeinschlußstruktur (1; 19) mit einer Fundamentationsschicht (2), die in Müll und/oder dem Boden eingebettet ist; und **dadurch gekennzeichnet, daß** sie eine Anzahl Einschlußschichten (8; 20) aufweist, die auf die Fundamentationsschicht geschichtet sind, und von denen jede zum Halt durch ein Geogitter (9) abgedeckt ist, und einen äußeren Abschnitt (10; 21) aus Pflanzenerde oder Ton und einen inneren Abschnitt (11) aus verdichtetem Müll aufweist; wobei der äußere Abschnitt (10; 21) einen Wasserableitungssektor (12; 22) und einen Biogasableitungssektor (15; 23) aufweist und mit einem Windel von 75° oder weniger geneigt ist.

2. Mülldeponieeinschlußstruktur nach Anspruch 1, **dadurch gekennzeichnet, daß** jeder der inneren Abschnitte (11) eine Anzahl von Teilschichten (11a) aus verdichtetem Müll aufweist.

3. Mülldeponieeinschlußstruktur nach Anspruch 1 oder 2, **dadurch gekennzeichnet, daß** die Fundamentationsschicht (2) eine untere Schicht (3) aus feinem körnigen Material und eine obere Schicht (4) aus inertem wasserfreien Material aufweist.

4. Mülldeponieeinechlußstruktur nach Anspruch 3, **dadurch gekennzeichnet, daß** die obere Schicht (4) vollständig mit einer Geogewebeschicht (6) abgedeckt ist.

5. Mülldeponieeinschlußstruktur nach Anspruch 4, **dadurch gekennzeichnet, daß** die untere Schicht (3) oben mit einem Geogitter oder einer Geogewebeschicht (5) abgedeckt ist.

6. Mülldeponieeinschlußstruktur nach einem der vorhergehenden Ansprüche, **dadurch gekennzeichnet, daß** der äußere Abschnitt (10; 21) jeder der Einschlußschichten (8; 20) äußerlich mit einer Geojuteschicht (16) abgedeckt ist.

7. Mülldeponieeinschlußstruktur nach einem der vorhergehenden Ansprüche, **dadurch gekennzeichnet, daß** die ein elektrisch geschweißte Gitter (17) aufweist, das einen Basisabschnitt (17a) und einen Wandabschnitt (17b) aufweist, die in Bezug aufeinander durch eine Anzahl Zuganker (18) stabilisiert sind und für das Aufrechterhalten der gewünschten Neigung des äußeren Abschnitts (10; 21) sorgen.

## Revendications

1. Structure de confinement de tas de déchets (1 ; 19), comportant une couche de fondation (2) immergée dans les déchets et/ou dans le sol et **caractérisée en ce qu'**elle comprend un certain nombre de couches de confinement (8 ; 20) empilées au sommet de ladite couche de fondation, et dont chacune est recouverte pour être supportée par un géo-treillis (9), et comprend une portion externe (10 ; 21) de terre végétale ou d'argile, et une portion interne (11) de déchets compactés ; ladite portion externe (10 ; 21) comprenant un secteur d'écoulement des eaux (12 ; 22) et un secteur d'écoulement de biogaz (15 ; 23), et étant inclinée selon un angle de 75° ou moins.

2. Structure de confinement de tas de déchets selon la revendication 1, **caractérisée en ce que** chacune des portions internes (11) comprend un certain nombre de sous-couches (11a) de déchets compactés.

3. Structure de confinement de tas de déchets selon la revendication 1 ou 2, **caractérisée en ce que** la couche de fondation (2) comprend une couche inférieure (3) de matériau granulaire fin ; et une couche supérieure (4) de matériau anhydre inerte.

4. Structure de confinement de tas de déchets selon la revendication 3, **caractérisée en ce que** la couche supérieure (4) est recouverte complètement par une couche de géo-tissu (6).

5. Structure de confinement de tas de déchets selon la revendication 4, **caractérisée en ce que** la couche inférieure (3) est recouverte au sommet par une couche de géo-treillis ou de géo-tissu (5).

6. Structure de confinement de tas de déchets selon l'une quelconque des revendications précédentes, **caractérisée en ce que** la portion externe (10 ; 21) de chacune des couches de confinement (8 ; 20) est recouverte de manière externe d'une couche de géo-jute (16).

7. Structure de confinement de tas de déchets selon l'une quelconque des revendications précédentes, **caractérisée en ce qu'**elle comprend un treillis électrosoudé (17) comprenant une portion de base (17a) et une portion de paroi (17b), qui sont stabilisées l'une par rapport à l'autre par un certain nombre d'attaches (18), et assurent le maintien de l'inclinaison souhaitée de ladite portion externe (10 ; 21).
